# EUROPEAN PATENT APPLICATION

(11) **EP 4 495 772 A1**
(43) Date of publication of application: **22.01.2025**
(21) Application number: 23769465.8
(22) Date of filing: 03.02.2023
(51) Int. Cl.: G06F 9/50

(54) **DATA ACQUISITION METHOD AND APPARATUS, STORAGE MEDIUM, AND ELECTRONIC DEVICE**

(30) Priority: 15.03.2022 CN 202210256039
(71) Applicant: BEIJING YOUZHUJU NETWORK TECHNOLOGY CO. LTD., Beijing 101299 (CN)
(72) Inventor: QI, Sikai, Beijing 100086 (CN); ZHANG, Zongqiang, Beijing 100086 (CN); BAI, Yun, Beijing 100086 (CN); LIU, Zherui, Beijing 100086 (CN); WANG, Jian, Beijing 100086 (CN)
(74) Representative: Dentons UK and Middle East LLP
(86) International application number: PCT/CN2023/074457
(87) International publication number: WO 2023/173954

(57) **Abstract**

This disclosure relates to a data acquisition method and apparatus, a storage medium, and an electronic device, and relates to technical field of computers. The method includes: acquiring a first invoking request for invoking a virtual GPU installed on the first terminal, wherein the first invoking request carries an identifier corresponding to a first function; processing the first invoking request by the first function to obtain a second invoking request, and sending the second invoking request to a second terminal by the first function, to enable the second terminal to invoke, according to the second invoking request, a second function in a native function library of a physical GPU, and invoke, according to the second function, a physical GPU installed on the second terminal for processing, so as to obtain target data corresponding to the second invoking request, wherein the first function is a function having the same name as the second function in a function library of the first terminal; and receiving the target data returned by the second terminal. By adopting the method, a code is prevented from being modified when a user writes a GPU task, thereby being more transparent to a user program.

## Description

### CROSS REFERENCE TO RELATED APPLICATIONS

This application claims priority to Chinese Patent Application No. 202210256039.4, filed with the Chinese Patent Office on March 15, 2022 and entitled "DATA ACQUISITION METHOD AND APPARATUS, STORAGE MEDIUM, AND ELECTRONIC DEVICE", which is incorporated herein by reference in its entirety.

### FIELD

The present disclosure relates to the field of computer technologies, and in particular, to a data acquisition method and apparatus, a storage medium, and an electronic device.

### BACKGROUND

At present, a graphics processing unit (GPU) has limited resources and high cost. A device in which a GPU is installed locally is directly used to complete a GPU task. Most of the time the GPU is idle, which causes a serious waste of resources. In addition, it is not practical to install a GPU for each device locally.

In the related art, there is a solution of sending a local GPU task to a GPU of a remote device for execution, so as to complete the GPU task by the GPU of the remote device. In this way, the GPU task may be implemented in a local device without a GPU. However, the solution in the related art generally needs to modify a code when a GPU task is written.

### SUMMARY

This Summary is provided to introduce the concepts in a simplified form that are further described below in the Detailed Description. This Summary is not intended to identify key features or essential features of the claimed subject matter, nor is it intended to be used to limit the scope of the claimed subject matter.

According to a first aspect, this disclosure provides a data acquisition method applied at a first terminal, the method comprising:
acquiring a first invoking request for invoking a virtual GPU installed on the first terminal, wherein the first invoking request carries an identifier corresponding to a first function;
processing the first invoking request by the first function to obtain a second invoking request, and sending the second invoking request to a second terminal by the first function, to enable the second terminal to invoke, according to the second invoking request, a second function in a native function library of a physical GPU, and invoke, according to the second function, a physical GPU installed on the second terminal for processing, so as to obtain target data corresponding to the second invoking request, wherein the first function is a function having the same name as the second function in a function library of the first terminal; and
receiving the target data returned by the second terminal.

According to a second aspect, this disclosure provides a data acquisition apparatus applied at a first terminal, the apparatus comprising:
a first invoking request acquisition module configured to acquire a first invoking request for invoking a virtual GPU installed on the first terminal, wherein the first invoking request carries an identifier corresponding to a first function;
a second invoking request generation module configured to process the first invoking request by the first function to obtain a second invoking request, and send the second invoking request to a second terminal by the first function, to enable the second terminal to invoke, according to the second invoking request, a second function in a native function library of a physical GPU, and invoke, according to the second function, a physical GPU installed on the second terminal for processing, so as to obtain target data corresponding to the second invoking request, wherein the first function is a function having the same name as the second function in a function library of the first terminal; and
a target data receiving module configured to receive the target data returned by the second terminal.

According to a third aspect, this disclosure provides a computer readable medium having a computer program stored thereon, wherein the program, when executed by a processing device, implements steps of the method of the first aspect.

According to a fourth aspect, this disclosure provides an electronic device, comprising:
a memory device having at least one computer program stored thereon; and
at least one processing device, configured to execute the at least one computer program in the memory device, to implement steps of the method of the first aspect.

According to a fifth aspect, this disclosure provides a computer program product comprising a computer executable instruction, wherein the computer executable instruction, when executed by a processor, implements steps of the method of the first aspect.

According to a sixth aspect, this disclosure provides a computer program, the computer program, when executed by a processor, implementing steps of the method of the first aspect.

Additional features and advantages of the disclosure will be set forth in the detailed description which follows.

### BRIEF DESCRIPTION OF THE DRAWINGS

The above and other features, advantages, and aspects of various embodiments of the present disclosure will become more apparent with reference to the following detailed description taken in conjunction with the accompanying drawings. The same or like reference numerals represent the same or like elements throughout the drawings. It can be understood that the drawings are illustrative and that the elements and components are not necessarily drawn to scale. In the drawings:
FIG. 1 is a schematic diagram of an application environment provided according to an example embodiment;
FIG. 2 is a schematic flowchart of a data acquisition method according to an example embodiment;
FIG. 3 is a schematic diagram of another application environment provided according to an example embodiment;
FIG. 4 is a schematic diagram of module connections of a data acquisition apparatus according to an example embodiment; and
FIG. 5 is a schematic structural diagram of an electronic device according to an example embodiment.

### DETAILED DESCRIPTION

Embodiments of the present disclosure will be described in more detail below with reference to the accompanying drawings. Although certain embodiments of the present disclosure are shown in the drawings, it should be understood that the present disclosure may be implemented in various forms and should not be construed as being limited to the embodiments set forth herein, but rather these embodiments are provided for a thorough and complete understanding of the present disclosure. It should be understood that the drawings and embodiments of the present disclosure are only for illustrative purposes and are not intended to limit the scope of the present disclosure.

It should be understood that, the steps recorded in the method embodiments of the present disclosure may be executed in different orders, and/or executed in parallel. Furthermore, method embodiments may include additional steps and/or omit the steps illustrated performing. The scope of the present disclosure is not limited in this respect.

The term "comprising" and variations thereof, as used herein, is inclusive, i.e., "including but not limited to". The term "based on" means "based at least in part on". The term "one embodiment" means "at least one embodiment"; the term "other embodiment" means "at least one other embodiment"; and the term "some embodiments" means "at least some embodiments". Relevant definitions of other terms will be given in the following description.

It should be noted that, the term "first", "second" and other concepts mentioned in the present disclosure are only used to distinguish different apparatuses, modules, or units, but are not used to limit the sequence or dependency of functions performed by these apparatuses, modules, or units.

It should be noted that the modifications of "one", "more" mentioned in the present disclosure are illustrative rather than restrictive, and those skilled in the art should understand that they should be understood as "one or more" unless the context clearly indicates otherwise.

The names of messages or information interacted between a plurality of apparatuses in the embodiments of the disclosure are only for illustrative purposes, and are not intended to limit the scope of these messages or information.

In the related art, there are some frameworks, such as tensorflow and pytorch, which may submit a GPU task to a remote machine for execution. However, when these frameworks are in use, a user realizes that a GPU on the remote machine is used by himself, and some codes need to be additionally added on the basis of codes of the GPU task when the GPU task is programmed. The GPU task may include developing, debugging, running a GPU program, and the like, and when the GPU task is executed, the GPU is invoked for processing.

For example, tf needs to display and invoke a tf.config.experimental_connect_to_cluster method, for another example, Torch usually needs to be compiled with xla, and some codes need to be added to the codes that can be run through by the original stand-alone machine, such as xm.mark_step() and the like.

Since some codes need to be additionally added, the whole task programming process of the GPU becomes complex, and not transparent to a user program. In addition, since it is different from a conventional programming habit on a device with a GPU installed locally, the possibility of programming error by user is increased.

In view of the above technical problems, embodiments of the present disclosure provide a data acquisition method and apparatus, a storage medium, and an electronic device. When a first invoking request is acquired at a first terminal without a physical GPU installed, the first invoking request is processed to acquire a second invoking request. Then the second invoking request is processed through the physical GPU of the remote second terminal, and the processed target data is returned to the first terminal. In such way, a function that a GPU task may be completed even in the case where a first terminal does not have a GPU is realized. In addition, a virtual GPU is installed on the first terminal, and a first function in a function library of the first terminal corresponding to the virtual GPU has the same name as that of a second function in a native function library of the physical GPU. Thus, when programming a GPU task, a user may perform programming according to a programming habit as if the first terminal has a physical GPU. Therefore, a code is prevented from being modified when a user writes a GPU task, so that the programming process is more transparent to user program, and a probability that programming of the user is erroneous is also reduced.

To facilitate detailed description of the solutions of the present application, an application environment in the embodiments of the present disclosure is first introduced in the following with reference to the accompanying drawings.

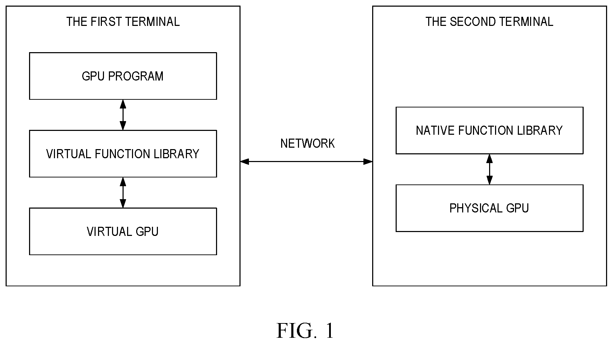

In some embodiments, referring to FIG. 1, it is a schematic diagram of an application environment according to an embodiment of the present disclosure. There are a first terminal and a second terminal, wherein the first terminal and the second terminal are connected via a network. The first terminal may send a revoking request to virtual GPU by the local GPU program to the second terminal by using the first function in the virtual function library, to enable the second terminal to invoke a second function, which has the same name as the first function, in the native function library of the physical GPU of the second terminal, and to invoke, according to the second function, a physical GPU installed in the second terminal for processing, so as to support a user to develop, debug and run a GPU program on a machine without a GPU device. Furthermore, the whole process is transparent to the user program, as if the GPU device is local to the first terminal.

The following describes in detail a data acquisition method and apparatus, a storage medium, and an electronic device according to embodiments of the present invention with reference to the accompanying drawings.

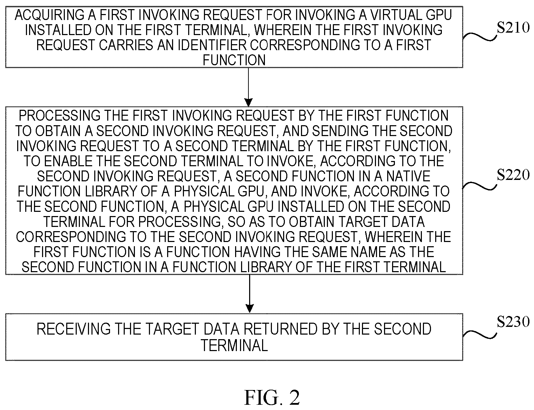

FIG. 2 is a schematic flowchart of a data acquisition method according to an example embodiment. The data acquisition method provided by an embodiment of the present disclosure may be executed by the first terminal shown in FIG. 1, specifically may be executed by a data acquisition apparatus. The apparatus may be implemented by software and/or hardware and is configured in the first terminal shown in FIG. 1. Please refer to FIG. 2, the data acquisition method according to an embodiment of the present disclosure may include the following steps:
S210: acquiring a first invoking request for invoking a virtual GPU installed on the first terminal, wherein the first invoking request carries an identifier corresponding to a first function.

The virtual GPU may be understood as a GPU virtualized locally on the first terminal, which is different from a real physical GPU and cannot perform calculation.

In some implementations, a drive device may be created, and may be mounted in the path, /dev/remotegpu, which may be a Linux drive device. The drive device may create configuration information for the remote physical GPU in the proc file system, such as /proc/driver/bytedance/remotegpu0, /proc/driver/bytedance/remotegpu1. Information of a real remote physical GPU is stored in each file. For example, the virtual GPU device points to a remote second terminal with an IP address of 192.0.0.1, and a UUID is a GPU device of a GPU-5a0622d3-66c6-4f39-30fd-d31ab6401071. In this process, creation of a virtual GPU is completed, and subsequently, the first terminal may access the second terminal through an Ethernet network.

It can be understood that, because invoking the GPU to perform computation is implemented by invoking a corresponding function, the first invoking request carries an identifier corresponding to the first function.

The first invoking request may be initiated by any GPU program of the first terminal. For example, the first invoking request may be a certain game, drawing software, or the like that needs to invoke a GPU for processing.

S220, processing the first invoking request by the first function to obtain a second invoking request, and sending the second invoking request to a second terminal by the first function, to enable the second terminal to invoke, according to the second invoking request, a second function in a native function library of a physical GPU, and invoke, according to the second function, a physical GPU installed on the second terminal for processing, so as to obtain target data corresponding to the second invoking request, wherein the first function is a function having the same name as the second function in a function library of the first terminal.

In the embodiments of the present disclosure, after acquiring the first invoking request, the first terminal may parse the first invoking request, obtaining an identifier corresponding to the first function included therein, and then invoke the corresponding first function according to the identifier for processing. Since the GPU of the first terminal is a virtual GPU and cannot perform calculation, the first function will not invoke the virtual GPU to calculate the first invoking request, instead, re-encapsulates the first invoking request to obtain the second invoking request, and sends the second invoking request to the second terminal.

In some implementations, the function executed by the first function mainly comprises two parts, and the functions of the two parts may be respectively completed by corresponding sub-functions, for example, a first sub-function and a second sub-function. The first sub-function completes the function of re-encapsulating a first invoking request to obtain a second invoking request, and the second sub-function completes the function of sending the second invoking request to a second terminal.

After sending the second invoking request to the second terminal, the second terminal is able to invoke, according to the second invoking request, the second function having the same name as the first function in the native function library of the physical GPU, and invoke, according to the second function, the physical GPU installed on the second terminal for processing, so as to obtain target data corresponding to the second invoking request.

It can be understood that the native function library of the physical GPU may comprise a native cuda function library and a native nvidia function library. In the embodiments of the present disclosure, the function library where the first function is located may be a custom cuda function library and a custom nvidia function library. After the custom cuda function library and the custom nvidia function library are invoked, the physical GPU is not directly operated to perform calculation.

S230: receiving the target data returned by the second terminal.

In the embodiments of the present disclosure, after invoking a physical GPU installed therein to process the second invoking request to obtain the target data, the second terminal may return the target data to the first terminal, to enable the first terminal to receive the target data returned by the second terminal.

In some implementations, after receiving the target data returned by the second terminal, the first terminal may return the target data to the corresponding upper-layer application program.

By adopting the above method, when a first terminal without a physical GPU installed acquires a first invoking request, the first invoking request may be processed to obtain a second invoking request, and then the second invoking request may be processed by using a physical GPU of the remote second terminal, and return the processed target data to the first terminal, thus realizing the function of completing a GPU task even in the case where the first terminal does not have a GPU installed. In addition, since the virtual GPU is installed in the first terminal, and the first function in the function library of the first terminal corresponding to the virtual GPU has the same name as the second function in the native function library of the physical GPU, when programming a GPU task, a user may perform programming according to a programming habit as if the first terminal has a physical GPU. In this way, it is avoided that a code is modified when a user writes a GPU task, the programming process is more transparent to the user program, and the probability of programming an error by the user is also reduced.

It can be understood that a physical GPU has a corresponding video memory address in a second terminal. In addition, in order to reduce changes to programming codes as far as possible and to be transparent to a user program, a virtual GPU may also have a corresponding video memory address in a first terminal, wherein the video memory address of the virtual GPU in the first terminal may be virtual.

In the embodiments of the present disclosure, it is equivalent to sending a GPU task locally executed on a first terminal to a remote second terminal for execution. Therefore, the corresponding GPU tasks in the first terminal and the second terminal are unchanged, that is, the request type included in the invoking request is unchanged. In some implementations, the first invoking request and the second invoking request are both computation sub-request for invoking the GPU for computation. At this time, the second invoking request may specifically include a computation sub-request for invoking a physical GPU for computation. In this case, processing the first invoking request by the first function to obtain a second invoking request comprises the following steps:

in response to a determination that the second invoking request comprises a computation sub-request for invoking the physical GPU for computation, acquiring, by the first function, an identifier corresponding to the first function, configuration information of the physical GPU, a computation parameter, and a target video memory address; and generating the computation sub-request by the first function based on the identifier corresponding to the first function, the configuration information of the physical GPU, the computation parameter, and the target video memory address.

Since GPU functions correspondingly completed in the first terminal and the second terminal remain unchanged, when the second invoking request is generated, the invoked functions are the same, and the computation parameters are also the same. In addition, since configuration information about a virtual GPU points to configuration information about a real physical GPU, therefore, the configuration information of the virtual GPU is the same as the configuration information of the physical GPU. However, considering that the video memory address in the first terminal does not correspond to the video memory address in the second terminal, therefore, when the second invoking request is generated, a video memory address actually corresponding to computation performed by the physical GPU in the second terminal also needs to be acquired, namely, a target video memory address.

Accordingly, in the embodiments of the present disclosure, the identifier corresponding to the first function, the configuration information of the physical GPU, the computation parameter, and the target video memory address may be acquired firstly by using the first function, and then the computation sub-request is generated based on the identifier corresponding to the first function, the configuration information of the physical GPU, the computation parameter, and the target video memory address by using the first function.

For example, when the first invoking request and the second invoking request are both computation sub-requests for invoking the GPU for computation, the first function may be a cuLaunchKernel function.

In some implementations, acquiring the target video memory address may include the following steps:
acquiring an original video memory address of the first terminal used by the virtual GPU for calculation; and determining a target video memory address in the second terminal corresponding to the original video memory address, based on a mapping relationship between a video memory address in the first terminal and a video memory address in the second terminal.

In the embodiment of the present disclosure, in the first terminal, the first invoking request may be parsed by using the first function, thereby obtaining the identifier corresponding to the first function, the configuration information of the physical GPU, the computation parameter, and the original video memory address of the first terminal used by the virtual GPU. After the original video memory address of the first terminal used by the virtual GPU for computation is obtained, a target video memory address in the second terminal corresponding to the original video memory address may be determined, based on a mapping relationship between a video memory address in the first terminal and a video memory address in the second terminal.

In addition, in some implementations, after acquiring the first invoking request, the first terminal may also forward the first invoking request to the second terminal directly by the first function. The second terminal parses the first invoking request to obtain the identifier corresponding to the first function, the configuration information of the physical GPU, the computation parameter, and the target video memory address, and a computation sub-request is generated based on the identifier corresponding to the first function, the configuration information of the physical GPU, the computation parameter and the target video memory address. In this case, the mapping relationship between the video memory address in the first terminal and the video memory address in the second terminal may also be stored in the second terminal.

In other implementations, the first invoking request and the second invoking request are both change sub-requests for invoking the GPU to change the video memory. At this time, the second invoking request may specifically comprise a change sub-request for invoking the physical GPU to change the video memory, the target data comprises a first changed video memory address after the physical GPU changes the video memory, and in this case, the data acquisition method of the embodiments of this disclosure further comprises: after the obtaining the target data,
acquiring a second changed video memory address after the virtual GPU changes the video memory, and the first changed video memory address; and updating the mapping relationship based on the first changed video memory address and the second changed video memory address.

In conjunction with the described contents, it can be seen that the physical GPU has a corresponding video memory address in the second terminal, and the virtual GPU has a corresponding video memory address in the first terminal. After the first terminal acquires the first invoking request, the virtual GPU may also change the video memory address in the first terminal, obtaining a second changed video memory address. Further, in order to ensure the accurate completion of subsequent GPU tasks, after the target data is acquired, the first changed video memory address may be corresponding to the changed second changed video memory address, so that the mapping relationship is updated.

In some implementations, the change sub-request for changing the video memory may include a video memory application sub-request and a video memory release sub-request. For example, when the first invoking request and the second invoking request are both change sub-requests for invoking the GPU to change the display, the first function may be a cuMemAlloc function.

In addition, considering that the function library where the first function is located is not a native function library of the physical GPU, it cannot be directly deployed at a deployment location of the native function library of the physical GPU. For example, it cannot be directly deployed on the path of /usr/lib/x86_64-linux-gnu/libnvidia-ml.so.1 or the path of /usr/lib/x86_64-linux-gnu/libcuda.so.1. In this case, in order to further reduce modification of codes when a user writes a GPU task, and the whole process is more transparent to a user program, in some implementations, the data acquisition method of the embodiments of the present disclosure may further comprise the following steps:

acquiring an actual installation location of the function library of the first terminal; and softlinking the actual installation location to a general installation location of a native function library of the physical GPU on the first terminal.

A softlink, also called a symbolic link, may be regarded as an alias of a file, and the file contains a path name of another file. It may be any file or directory, and may link files of different file systems. The softlink makes it unnecessary to put a file that must be the same under each required directory when the same file is used in different directories. Instead, it is only necessary to put the file on a certain fixed directory, and then the file is linked under other directories.

For example, assuming that the function library corresponding to the first function is deployed on a path of /usr/lib/x86_64-linux-gnu/libcuda.so, then the function library may be softlinked to a path of /usr/lib/x86_64-linux-gnu/libcuda.so.1. Alternatively, assuming that the function library corresponding to the first function is deployed on a path of /usr/lib/x86_64-linux-gnu/libnvidia.so, then the function library may be softlinked to a path of /usr/lib/x86_64-linux-gnu/libnvidia.so.1.

By softlinking an actual installation location of a function library of a first terminal to a general installation location of a native function library of a physical GPU on the first terminal, even in the case where it is inconvenient to install the first function library at the general installation location of the native function library, it is still possible to reduce a code modification when a user writes a GPU task, the process be more transparent to a user program.

In some implementations, a first terminal may communicate with a second terminal by using a remote invoking protocol. For example, a remote invoking server may be deployed in the second terminal, and a remote invoking client (namely, a first function) may be deployed in the first terminal, therefore, the client may communicate with the server by using the remote invoking protocol. In this case, the second invoking request may be sent to the second terminal based on the remote invoking protocol by the first function, and the target data returned by the second terminal may be received by the remote invoking protocol.

In addition, considering that some terminals are installed with remote direct data access network cards, in this case, network may be accelerated by using a remote direct data access technology. Therefore, in other implementations, the first terminal and the second terminal may communicate through a remote invoking protocol and a remote direct data access network. Thus, the data packet type corresponding to the second invoking request may be subdivided into a control transmission data packet and a data transmission data packet, the data packet type corresponding to the target data may be subdivided into a control transmission data packet and a data transmission data packet. In this case, the second invoking request is sent to the second terminal by the first function comprises the following steps:

sending the control transmission data packet corresponding to the second invoking request to the second terminal based on a remote invoking protocol by the first function; and/or sending the data transmission data packet corresponding to the second invoking request to the second terminal based on a remote direct data access network by the first function.

Likewise, the receiving the target data returned by the second terminal comprises the following steps:
receiving the control transmission data packet corresponding to the target data through the remote invoking protocol; and/or receiving the data transmission data packet corresponding to the target data through the remote direct data access network.

The remote invoking protocol is referred to as rpc (Remote Procedure Call Protocol) protocol for short, and the remote direct data access is referred to as RDMA (Remote Direct Memory Access) for short.

That is to say, in the embodiments of the present disclosure, when the second invoking request comprises a control transmission data packet, the control transmission data packet corresponding to the second invoking request may be sent to the second terminal based on the remote invoking protocol, while the second invoking request comprises a data transmission data packet, the data transmission data packet corresponding to the second invoking request may be sent to the second terminal based on the remote direct data access network. When the target data comprises a control transmission data packet, the control transmission data packet corresponding to the target data may be received by a remote invoking protocol, while the target data comprises a data transmission data packet, the data transmission data packet corresponding to the target data may be received by the remote direct data access network.

In addition, in some implementations, the first function comprises an MPI_Send function and an MPI_Recv function. In this case, sending the data transmission data packet corresponding to the second invoking request to the second terminal based on a remote direct data access network by the first function comprises: invoking the MPI_Send function to send the data transmission data packet corresponding to the second invoking request to the second terminal based on the remote direct data access network.

Receiving the data transmission data packet corresponding to the target data through the remote direct data access network comprises: invoking the MPI_Recv function to copy the data transmission data packet corresponding to the target data through the remote direct data access network.

In the embodiments of the present disclosure, when a first terminal sends a data transmission data packet to a second terminal, for example, when a cuMecpyHtoD function is invoked to send the data packet, an MPI_Send function may be invoked to send the data transmission data packet to the second terminal through a remote direct data access network, so as to implement network acceleration when the first terminal sends data to the second terminal.

When the first terminal copies data from the second terminal, for example, when a cuMemcpyDtoH function is invoked to copy a data packet, an MPI_Recv function may be invoked to copy the data packet from the second terminal through the remote direct data access network, for example, copy the video memory data of the GPU from the second terminal, so as to implement network acceleration when the first terminal copies data from the second terminal.

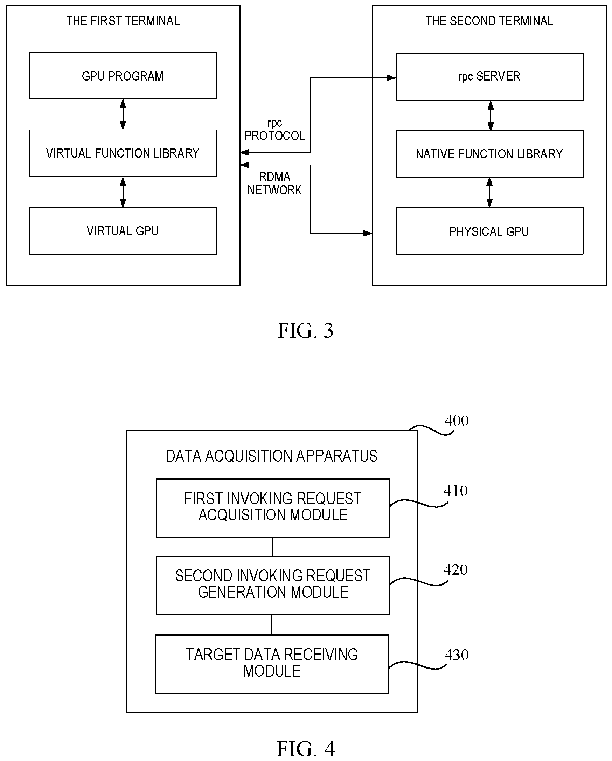

Please refer to FIG. 3, which is a schematic diagram of another application environment involved in an embodiment of the present disclosure. There are a first terminal and a second terminal, wherein the first terminal and the second terminal may be connected via an rpc protocol and an RDMA network. The first terminal may, by the first function in the virtual function library, send the local control transmission data packet to the rpc server of the second terminal based on the rpc protocol, and receive a control transmission data packet from an rpc server by an rpc protocol, and may also, by the first function in the virtual function library, send a local data transmission data packet to the second terminal based on an RDMA network, and receive the data transmission data packet from the second terminal via the RDMA network.

FIG. 4 is a schematic diagram of module connections of a data acquisition apparatus according to an example embodiment. As shown in FIG. 4, an embodiment of the present disclosure provides a data acquisition apparatus applied at a first terminal rod. The apparatus 400 may comprise:

a first invoking request acquisition module 410 configured to acquire a first invoking request for invoking a virtual GPU installed on the first terminal, wherein the first invoking request carries an identifier corresponding to a first function;
a second invoking request generation module 420 configured to process the first invoking request by the first function to obtain a second invoking request, and send the second invoking request to a second terminal by the first function, to enable the second terminal to invoke, according to the second invoking request, a second function in a native function library of a physical GPU, and invoke, according to the second function, a physical GPU installed on the second terminal for processing, so as to obtain target data corresponding to the second invoking request, wherein the first function is a function having the same name as the second function in a function library of the first terminal; and
a target data receiving module 430 configured to receive the target data returned by the second terminal.

Optionally, the second invoking request generation module 420 comprises:
an acquisition sub-module configured for, in response to a determination that the second invoking request comprises a computation sub-request for invoking the physical GPU for computation, acquiring, by the first function, an identifier corresponding to the first function, configuration information of the physical GPU, a computation parameter, and a target video memory address; and
a computation request generation sub-module configured for, generating the computation sub-request by the first function based on the identifier corresponding to the first function, the configuration information of the physical GPU, the computation parameter, and the target video memory address.

Optionally, the acquisition sub-module is further configured for acquiring an original video memory address of the first terminal used by the virtual GPU for calculation; and determining a target video memory address in the second terminal corresponding to the original video memory address, based on a mapping relationship between a video memory address in the first terminal and a video memory address in the second terminal.

Optionally, when the second invoking request is a change sub-request for invoking the physical GPU to change the video memory, the target data comprises a first changed video memory address after the physical GPU changes the video memory, and in this case, the apparatus 400 further comprises:
a changed video memory address acquisition module configured for acquiring a second changed video memory address after the virtual GPU changes the video memory, and the first changed video memory address; and
a mapping relationship updating module configured for updating the mapping relationship based on the first changed video memory address and the second changed video memory address.

Optionally, the apparatus 400 further comprises:

An actual installation location acquisition module configure for acquiring an actual installation location of the function library of the first terminal; and
a softlingking module configured for softlinking the actual installation location to a general installation location of a native function library of the physical GPU on the first terminal.

Optionally, a data packet type corresponding to the second invoking request comprises a control transmission data packet and a data transmission data packet, a data packet type corresponding to the target data comprises a control transmission data packet and a data transmission data packet, and the second invoking request generation module 420 comprises:
a first sending sub-module configured for sending the control transmission data packet corresponding to the second invoking request to the second terminal based on a remote invoking protocol by the first function; and
a second sending sub-module configured for sending the data transmission data packet corresponding to the second invoking request to the second terminal based on a remote direct data access network by the first function;
the target data receiving module 430 comprises:
   a first receiving sub-module configured for receiving the control transmission data packet corresponding to the target data through the remote invoking protocol; and
   a second receiving sub-module configured for receiving the data transmission data packet corresponding to the target data through the remote direct data access network.

Optionally, the first function comprises an MPI_Send function and an MPI_Recv function, and the second sending sub-module is further configured for invoking the MPI_Send function to send the data transmission data packet corresponding to the second invoking request to the second terminal based on the remote direct data access network. The second receiving sub-module is further configured for invoking the MPI_Recv function to copy the data transmission data packet corresponding to the target data through the remote direct data access network.

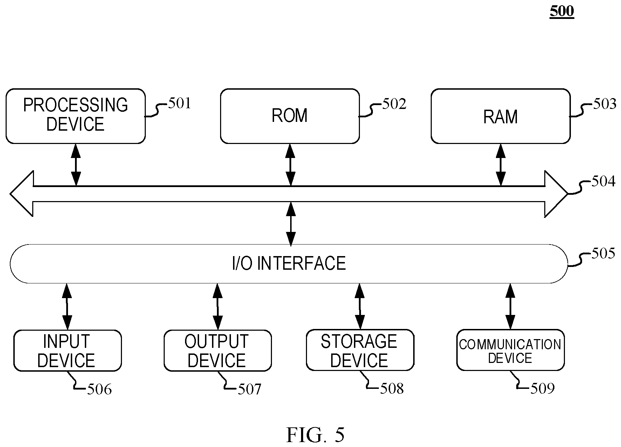

Referring now to FIG. 5, it shows a schematic structural diagram of an electronic device 500 suitable for implementing embodiments of the present disclosure. The terminal device in the embodiment of the present disclosure may include, but is not limited to, a mobile terminal such as a mobile phone, a notebook computer, a digital broadcast receiver, a PDA (personal digital assistant), a PAD (portable android device), a PMP (portable multimedia player), a vehicle-mounted terminal (for example, a vehicle-mounted navigation terminal), and the like, and a fixed terminal such as a digital TV, a desktop computer, and the like. The electronic device shown in FIG. 5 is merely an example and should not bring any limitation to the functions and scope of use of the embodiments of the present disclosure.

As shown in FIG. 5, the electronic device 500 may include processing device (e.g., central processing unit, graphics processing unit, etc.)501 that may perform various suitable actions and processes in accordance with a program stored in read only memory (ROM) 502 or a program loaded into random access memory (RAM) 503 from storage device 508. In the RAM 503, various programs and data necessary for the operation of the electronic device 500 are also stored. The processing device 501, the ROM 502, and the RAM 503 are connected to each other via a bus 504. An input/output (I/O) interface 505 is also connected to the bus 504.

In general, the following apparatus may be connected to the I/O interface 505: an input device 506 including, for example, a touch screen, a touch pad, a keyboard, a mouse, a camera, a microphone, an accelerometer, a gyroscope, or the like; an output device 507 including, for example, a liquid crystal display (LCD), a speaker, a vibrator, or the like; a storage device 508 including, for example, a magnetic tape, a hard disk, or the like; and a communication device 509. The communication device 509 may allow electronic device 500 to communicate wirelessly or wired with other devices to exchange data. While FIG. 5 illustrates an electronic device 500 with a variety of component, it should be understood that it is not required that all of the illustrated components be implemented or provided. More or fewer components may alternatively be implemented or provided.

In particular, the processes described above with reference to the flowcharts may be implemented as computer software programs in accordance with embodiments of the present disclosure. For example, embodiments of the present disclosure include a computer program product comprising a computer program carried on a non-transitory computer readable medium. The computer program comprises a program code for executing the method as shown in the flowchart. In such an embodiment, the computer program may be downloaded and installed from the network via communications device 509, or installed from storage device 1308, or installed from ROM 1302. When the computer program is executed by the processing device 501, the above-described functions defined in the method of embodiments of the present disclosure are executed.

It should be noted that the computer readable medium in the present disclosure may be a computer readable signal medium or a computer readable storage medium, or any combination thereof. A computer readable storage medium may be, for example, but not limited to, an electronic, magnetic, optical, electromagnetic, infrared, or semiconductor system, apparatus, or device, or any suitable combination of the foregoing. More specific examples of the computer readable storage medium may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the present disclosure, a computer readable storage medium may be any tangible medium that can contain or store a program for use by or in connection with an instruction execution system, apparatus, or device. While in the present disclosure, a computer readable signal medium may include a propagated data signal with computer readable program code embodied therein, for example, in baseband or as part of a carrier wave. Such a propagated signal may take any of a variety of forms, including, but not limited to, electro-magnetic signal, optical signal, or any suitable combination thereof. A computer readable signal medium may also be any computer readable medium that is not a computer readable storage medium and that can send, propagate, or transport a program for use by or in connection with an instruction execution system, apparatus, or device. Program code embodied on a computer readable medium may be transmitted using any appropriate medium, including, but not limited to, wireline, optical fiber cable, RF (radio frequency), etc., or any suitable combination of the foregoing.

In some implementations, clients may communicate using any currently known or future developed network protocol such as HTTP (Hypertext Transfer Protocol) and may be interconnected with digital data communication (e.g., a communication network) in any form or medium. Examples of communication networks include a local area network ("LAN"), a wide area network ("WAN"), an internetwork (e.g., the Internet), and a peer-to-peer network (e.g., an ad hoc peer-to-peer network), as well as any currently known or future developed network.

The above computer readable medium may be included in the electronic device, or may exist separately and not be installed in the electronic device.

The above computer readable medium carries one or more programs. When the one or more programs are executed by the electronic device, the electronic device is enabled to: obtain a current process priority of a hosting application; adjusting a process priority of a target process of a host application corresponding to the hosting application to be consistent with the current process priority, wherein the target process creates, for the host application, a process necessary for running a virtual running environment of the hosting application; wherein there is a dependency relationship between the process priority of the hosting application and the process priority of the target process, and the dependency relationship enables the process priority of the target process to change following a change in the process priority of the hosting application.

Computer program code for carrying out operations of the present disclosure may be written in any combination of one or more programming languages, including an object oriented programming language such as Java, Smalltalk, C++ or the like and conventional procedural programming languages, such as the 'C' programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The flowchart and block diagrams in the Figures illustrate the architecture, functionality, and operation of possible implementations of systems, methods and computer program products according to various embodiments of the present disclosure. In this regard, each block in the flowchart or block diagrams may represent a module, a program segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart, and combinations of blocks in the block diagrams and/or flowchart, can be implemented by special purpose hardware-based systems that perform the specified functions or acts, or combinations of special purpose hardware and computer instructions.

The modules involved in the embodiments of the present disclosure may be implemented through software or hardware. The name of a module does not constitute a limitation to the module itself in some cases.

The functions described herein above may be performed, at least in part, by one or more hardware logic components. For example, without limitation, exemplary types of hardware logic components that can be used include Field-programmable Gate Arrays (FPGAs), Program-specific Integrated Circuits (ASICs), Application-specific Standard Products (ASSPs), System-on-a-chip systems (SOCs), Complex Programmable Logic Devices (CPLDs), etc.

In the context of this disclosure, a machine-readable medium may be tangible media that may contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of machine-readable storage media include an electrical connection based on one or more wires, a portable computer diskette, a hard disk, a random access memory (RAM), a read-only memory (ROM), an erasable programmable read-only memory (EPROM or Flash memory), an optical fiber, a compact disc read-only memory (CD-ROM), an optical storage device, a magnetic storage device, or any suitable combination of the foregoing.

According to one or more embodiments of this disclosure, Example 1 provides a data acquisition method applied at a first terminal, the method comprising:
acquiring a first invoking request for invoking a virtual GPU installed on the first terminal, wherein the first invoking request carries an identifier corresponding to a first function;
processing the first invoking request by the first function to obtain a second invoking request, and sending the second invoking request to a second terminal by the first function, to enable the second terminal to invoke, according to the second invoking request, a second function in a native function library of a physical GPU, and invoke, according to the second function, a physical GPU installed on the second terminal for processing, so as to obtain target data corresponding to the second invoking request, wherein the first function is a function having the same name as the second function in a function library of the first terminal; and
receiving the target data returned by the second terminal.

According to one or more embodiments of this disclosure, Example 2 provides the method of Example **1,** the processing the first invoking request by the first function to obtain a second invoking request comprises:
in response to a determination that the second invoking request comprises a computation sub-request for invoking the physical GPU for computation, acquiring, by the first function, an identifier corresponding to the first function, configuration information of the physical GPU, a computation parameter, and a target video memory address; and
generating the computation sub-request by the first function based on the identifier corresponding to the first function, the configuration information of the physical GPU, the computation parameter, and the target video memory address.

According to one or more embodiments of this disclosure, Example 3 provides the method of Example 2, acquiring the target video memory address comprises:
acquiring an original video memory address of the first terminal used by the virtual GPU for calculation; and
determining a target video memory address in the second terminal corresponding to the original video memory address, based on a mapping relationship between a video memory address in the first terminal and a video memory address in the second terminal.

According to one or more embodiments of this disclosure, Example 4 provides the method of Example 3, wherein the second invoking request is a change sub-request for invoking the physical GPU to change the video memory, the target data comprises a first changed video memory address after the physical GPU changes the video memory, and the method further comprises: after the obtaining the target data,
acquiring a second changed video memory address after the virtual GPU changes the video memory, and the first changed video memory address; and
updating the mapping relationship based on the first changed video memory address and the second changed video memory address.

According to one or more embodiments of this disclosure, Example 5 provides the method of Example 1 the method further comprises:
acquiring an actual installation location of the function library of the first terminal; and
softlinking the actual installation location to a general installation location of a native function library of the physical GPU on the first terminal.

According to one or more embodiments of this disclosure, Example 6 provide the method of Examples 1 to 5, wherein a data packet type corresponding to the second invoking request comprises a control transmission data packet and a data transmission data packet, a data packet type corresponding to the target data comprises a control transmission data packet and a data transmission data packet, and sending the second invoking request to the second terminal by the first function comprises:
sending the control transmission data packet corresponding to the second invoking request to the second terminal based on a remote invoking protocol by the first function; and/or
sending the data transmission data packet corresponding to the second invoking request to the second terminal based on a remote direct data access network by the first function;
the receiving the target data returned by the second terminal comprises:
   receiving the control transmission data packet corresponding to the target data through the remote invoking protocol; and/or
   receiving the data transmission data packet corresponding to the target data through the remote direct data access network.

According to one or more embodiments of this disclosure, Example 7 provides the method of Example 6, the first function comprises an MPI_Send function and an MPI_Recv function, and sending the data transmission data packet corresponding to the second invoking request to the second terminal based on a remote direct data access network by the first function comprises:
invoking the MPI_Send function to send the data transmission data packet corresponding to the second invoking request to the second terminal based on the remote direct data access network; and
the receiving the data transmission data packet corresponding to the target data through the remote direct data access network comprises:
   invoking the MPI_Recv function to copy the data transmission data packet corresponding to the target data through the remote direct data access network.

According to one or more embodiments of this disclosure, Example 8 provides a data acquisition apparatus applied at a first terminal, the apparatus comprising:
a first invoking request acquisition module configured to acquire a first invoking request for invoking a virtual GPU installed on the first terminal, wherein the first invoking request carries an identifier corresponding to a first function;
a second invoking request generation module configured to process the first invoking request by the first function to obtain a second invoking request, and send the second invoking request to a second terminal by the first function, to enable the second terminal to invoke, according to the second invoking request, a second function in a native function library of a physical GPU, and invoke, according to the second function, a physical GPU installed on the second terminal for processing, so as to obtain target data corresponding to the second invoking request, wherein the first function is a function having the same name as the second function in a function library of the first terminal; and
a target data receiving module configured to receive the target data returned by the second terminal.

According to one or more embodiments of this disclosure, Example 9 provides the apparatus of Example 8, the second invoking request generation module comprises:
an acquisition sub-module configured for, in response to a determination that the second invoking request comprises a computation sub-request for invoking the physical GPU for computation, acquiring, by the first function, an identifier corresponding to the first function, configuration information of the physical GPU, a computation parameter, and a target video memory address; and
a computation request generation sub-module configured for, generating the computation sub-request by the first function based on the identifier corresponding to the first function, the configuration information of the physical GPU, the computation parameter, and the target video memory address.

According to one or more embodiments of this disclosure, Example 10 provides the apparatus of Example 9, the acquisition sub-module is further configured for acquiring an original video memory address of the first terminal used by the virtual GPU for calculation; and determining a target video memory address in the second terminal corresponding to the original video memory address, based on a mapping relationship between a video memory address in the first terminal and a video memory address in the second terminal.

According to one or more embodiments of this disclosure, Example 11 provides the apparatus of Example 10, when the second invoking request is a change sub-request for invoking the physical GPU to change the video memory, the target data comprises a first changed video memory address after the physical GPU changes the video memory, and in this case, the apparatus further comprises:
a changed video memory address acquisition module configured for acquiring a second changed video memory address after the virtual GPU changes the video memory, and the first changed video memory address; and
a mapping relationship updating module configured for updating the mapping relationship based on the first changed video memory address and the second changed video memory address.

According to one or more embodiments of this disclosure, Example 12 provides the apparatus of Example 8, the apparatus further comprises:
an actual installation location acquisition module configure for acquiring an actual installation location of the function library of the first terminal; and
a softlingking module configured for softlinking the actual installation location to a general installation location of a native function library of the physical GPU on the first terminal.

According to one or more embodiments of this disclosure, Example 13 provides the apparatus of any of Example 8 to 12, a data packet type corresponding to the second invoking request comprises a control transmission data packet and a data transmission data packet, a data packet type corresponding to the target data comprises a control transmission data packet and a data transmission data packet, and the second invoking request generation module comprises:
a first sending sub-module configured for sending the control transmission data packet corresponding to the second invoking request to the second terminal based on a remote invoking protocol by the first function; and
a second sending sub-module configured for sending the data transmission data packet corresponding to the second invoking request to the second terminal based on a remote direct data access network by the first function;
the target data receiving module comprises:
   a first receiving sub-module configured for receiving the control transmission data packet corresponding to the target data through the remote invoking protocol; and
   a second receiving sub-module configured for receiving the data transmission data packet corresponding to the target data through the remote direct data access network.

According to one or more embodiments of this disclosure, Example 14 provides the apparatus of Example 13, the first function comprises an MPI_Send function and an MPI_Recv function, and the second sending sub-module is further configured for invoking the MPI_Send function to send the data transmission data packet corresponding to the second invoking request to the second terminal based on the remote direct data access network. The second receiving sub-module is further configured for invoking the MPI_Recv function to copy the data transmission data packet corresponding to the target data through the remote direct data access network.

According to one or more embodiments of this disclosure, Example 15 provides a computer readable medium having a computer program stored thereon, wherein the program, when executed by a processing device, implements steps of the method of any one of Examples 1 to7.

According to one or more embodiments of this disclosure, Example 16 provides an electronic device, comprising:
a memory device having at least one computer program stored thereon; and
at least one processing device, configured to execute the at least one computer program in the memory device, to implement steps of the method of any one of Examples 1 to 7.

According to one or more embodiments of this disclosure, Example 17 provides a computer program product comprising a computer executable instruction, wherein the computer executable instruction, when executed by a processor, implements steps of the method of any one of Examples 1 to 7.

According to one or more embodiments of this disclosure, Example 18 provides a computer program, the computer program, when executed by a processor, implementing steps of the method of any one of Examples 1 to 7.

The foregoing description is merely illustrative of the preferred embodiments of the present disclosure and of the technical principles applied thereto. As will be appreciated by those skilled in the art, the disclosure of the present disclosure is not limited to the technical solution formed by the specific combination of the described technical features, it should also cover other technical solutions formed by any combination of the described technical features or equivalent features thereof without departing from the described disclosed concept. For example, the above features and technical features having similar functions disclosed in the present disclosure (but not limited thereto) are replaced with each other to form a technical solution.

In addition, while operations are depicted in a particular order, this should not be understood as requiring that the operations be performed in the particular order shown or in sequential order. Multitasking and parallel processing may be advantageous in certain circumstances. Likewise, while several specific implementation details are included in the above discussion, these should not be construed as limiting the scope of the present disclosure. Certain features that are described in the context of separate embodiments can also be implemented in combination in a single embodiment. Conversely, various features that are described in the context of a single embodiment can also be implemented in multiple embodiments separately or in any suitable subcombination.

Although the subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims. With respect to the apparatus in the foregoing embodiments, the specific manner in which the modules execute the operations has been described in detail in the embodiments of the method, and is not described in detail herein.

## Claims

1. A data acquisition method applied at a first terminal, the method comprising:
acquiring a first invoking request for invoking a virtual graphics processing unit (GPU) installed on the first terminal, wherein the first invoking request carries an identifier corresponding to a first function;
processing the first invoking request by the first function to obtain a second invoking request, and sending the second invoking request to a second terminal by the first function, to enable the second terminal to invoke, according to the second invoking request, a second function in a native function library of a physical GPU, and invoke, according to the second function, a physical GPU installed on the second terminal for processing, so as to obtain target data corresponding to the second invoking request, wherein the first function is a function having the same name as the second function in a function library of the first terminal; and
receiving the target data returned by the second terminal.

2. The data acquisition method of claim 1, wherein the processing the first invoking request by the first function to obtain a second invoking request comprises:
in response to a determination that the second invoking request comprises a computation sub-request for invoking the physical GPU for computation, acquiring, by the first function, an identifier corresponding to the first function, configuration information of the physical GPU, a computation parameter, and a target video memory address; and
generating the computation sub-request by the first function based on the identifier corresponding to the first function, the configuration information of the physical GPU, the computation parameter, and the target video memory address.

3. The data acquisition method of claim 2, wherein acquiring the target video memory address comprises:
acquiring an original video memory address of the first terminal used by the virtual GPU for calculation; and
determining a target video memory address in the second terminal corresponding to the original video memory address, based on a mapping relationship between a video memory address in the first terminal and a video memory address in the second terminal.

4. The data acquisition method of claim 3, wherein the second invoking request is a change sub-request for invoking the physical GPU to change the video memory, the target data comprises a first changed video memory address after the physical GPU changes the video memory, and the method further comprises: after the obtaining the target data,
acquiring a second changed video memory address after the virtual GPU changes the video memory, and the first changed video memory address; and
updating the mapping relationship based on the first changed video memory address and the second changed video memory address.

5. The data acquisition method of claim 1, wherein the method further comprises:
acquiring an actual installation location of the function library of the first terminal; and
softlinking the actual installation location to a general installation location of a native function library of the physical GPU on the first terminal.

6. The data acquisition method of any one of claims 1 to 5, wherein a data packet type corresponding to the second invoking request comprises a control transmission data packet and a data transmission data packet, a data packet type corresponding to the target data comprises a control transmission data packet and a data transmission data packet, and sending the second invoking request to the second terminal by the first function comprises:
sending the control transmission data packet corresponding to the second invoking request to the second terminal based on a remote invoking protocol by the first function; and/or
sending the data transmission data packet corresponding to the second invoking request to the second terminal based on a remote direct data access network by the first function;
the receiving the target data returned by the second terminal comprises:
receiving the control transmission data packet corresponding to the target data through the remote invoking protocol; and/or
receiving the data transmission data packet corresponding to the target data through the remote direct data access network.

7. The data acquisition method of claim 6, wherein the first function comprises an MPI_Send function and an MPI_Recv function, and sending the data transmission data packet corresponding to the second invoking request to the second terminal based on a remote direct data access network by the first function comprises:
invoking the MPI_Send function to send the data transmission data packet corresponding to the second invoking request to the second terminal based on the remote direct data access network; and
the receiving the data transmission data packet corresponding to the target data through the remote direct data access network comprises:
invoking the MPI_Recv function to copy the data transmission data packet corresponding to the target data through the remote direct data access network.

8. A data acquisition apparatus applied at a first terminal, the apparatus comprising:
a first invoking request acquisition module configured to acquire a first invoking request for invoking a virtual graphics processing unit (GPU) installed on the first terminal, wherein the first invoking request carries an identifier corresponding to a first function;
a second invoking request generation module configured to process the first invoking request by the first function to obtain a second invoking request, and send the second invoking request to a second terminal by the first function, to enable the second terminal to invoke, according to the second invoking request, a second function in a native function library of a physical GPU, and invoke, according to the second function, a physical GPU installed on the second terminal for processing, so as to obtain target data corresponding to the second invoking request, wherein the first function is a function having the same name as the second function in a function library of the first terminal; and
a target data receiving module configured to receive the target data returned by the second terminal.

9. A computer readable medium having a computer program stored thereon, wherein the program, when executed by a processing device, implements steps of the method of any one of claims 1 to7.

10. An electronic device, comprising:
a memory device having at least one computer program stored thereon; and
at least one processing device, configured to execute the at least one computer program in the memory device, to implement steps of the method of any one of claims 1 to 7.

11. A computer program product comprising a computer executable instruction, wherein the computer executable instruction, when executed by a processor, implements steps of the method of any one of claims 1 to 7.

12. A computer program, the computer program, when executed by a processor, implementing steps of the method of any one of claims 1 to 7.
